# EUROPÄISCHE PATENTANMELDUNG

(11) **EP 0 626 142 A1**
(43) Veröffentlichungstag der Anmeldung: **30.11.1994**
(21) Anmeldenummer: 93120269.1
(22) Anmeldetag: 16.12.1993
(51) Int. Cl.: A47B 83/00, A47B 81/06

(54) **Bildschirmarbeitsplatz-Konsole**

(30) Priorität: 11.05.1993 DE 9307118 U
(71) Anmelder: STN ATLAS Elektronik GmbH, D-28305 Bremen (DE)
(72) Erfinder: Bullerkist, Heinz, Dipl.-Ing., D-28857 Syke (DE); Niemeyer-Stein, Werner, Dipl.-Ing., D-28199 Bremen (DE)

(57) **Zusammenfassung**

Eine Bildschirmarbeitsplatz-Konsole umfaßt mindestens ein Datensichtgerät, Prozessoren zur Steuerung des Datensichtgeräts und eines zugeordneten Bedienpults zum Dialog mit dem Datensichtgerät, sowie eine Stromversorgungseinheit, die alle in einem mindestens zum Bedienpult hin abgeschlossenen Konsolengehäuse untergebracht sind. Eine Gehäuseöffnung gibt den Blick auf den Bildschirm des mindestens einen Datensichtgerätes frei, und dar Bedienpult ist an der Außenseite des Konsolengehäuses unterhalb der Gehäuseöffnung angeordnet. Zur Verhinderung einer langfristigen Abnahme der Darstellungsqualität des Bildschirms durch mechanische Abnutzung seiner Oberfläche ist die Gehäuseöffnung von mindestens einer durchsichtigen Scheibe vollständig abgedeckt, die längs ihrer vier Seitenränder einerseits gegenüber der vorderen Gehäusewand und andererseits gegenüber dem Bildschirm des Datensichtgeräts hermetisch abgedichtet ist.

## Beschreibung

Die Erfindung betrifft eine Bildschirmarbeitsplatz-Konsole der im Oberbegriff des Anspruchs 1 definierten Gattung.

Solche Konsolen werden bevorzugt als hermetisch geschlossene Konfigurationen konzipiert, um das Raumklima, dem der Konsolen-Bediener ausgesetzt ist, von der Geräteklimatisierung zu trennen und damit die Raumklimatisierung unabhängig von der notwendigen Belüftung der im Gehäuse aufgenommenen Konsolenbaueinheiten zu machen.

Bei einer bekannten Konsole dieser Art sind zum Erreichen der Geschlossenheit der zum Bediener hin gerichteten Konsolenfront die Abmessungen der Gehäuseöffnung so festgelegt, daß der Bildschirm des Datensichtgeräts exakt die Gehäuseöffnung ausfüllt. Die Ränder des Datensichtgerätes sind gegenüber der vorderen Konsolenwand abgedichtet, so daß keine Luft durch die Gehäuseöffnung hindurch austreten kann. Bei einer solchen Konsole ist die Oberfläche des Bildschirms allen Umweltbelastungen ausgesetzt, insbesondere entstehen nicht unerhebliche Staubablagerungen durch elektrostatische Aufladung und Verschmutzungen durch Berühren, so daß der Bildschirm durch ständiges Säubern und den damit verbundenen Abrieb auf seiner Oberfläche langfristig an Bildqualität und seine Strahlenschutzeigenschaften verliert.

Der Erfindung liegt die Aufgabe zugrunde, eine Bildschirmarbeitsplatz-Konsole der eingangs genannten Art so zu verbessern, daß langfristig eine Verschlechterung der Bildqualität durch Verschmutzung, Abnutzung und Beschädigung der Bildschirmaußenfläche verhindert wird.

Die Aufgabe ist bei einer Bildschirmarbeitsplatz-Konsole der im Oberbegriff des Anspruchs 1 definierten Gattung erfindungsgemäß durch die Merkmale im Kennzeichenteil des Anspruchs 1 gelöst.

Die erfindungsgemäße Bildschirmarbeitsplatz-Konsole hat den Vorteil, daß durch die in die Gehäuseöffnung eingesetzte und zur vorderen Gehäusewand hin abgedichtete durchsichtige Scheibe, z. B. Glasscheibe, nach wie vor das Konsolengehäuse auf der Vorderfront hermetisch abgeschlossen bleibt, gleichzeitig aber die Scheibe die Oberfläche des dahinterliegenden Bildschirms gegen Berührung und äußere Einflüsse schützt. Die hermetische Abdichtung der Scheibe gegenüber dem Bildschirm verhindert Staubablagerungen auf der Bildschirmoberfläche und auf der dem Bildschirm zugekehrten Scheibeninnenfläche, so daß auch durch Staubablagerungen langfristig keine Bildqualitätsminderung eintreten kann. Die Scheibenaußenfläche ist unempfindlich gegen Berührung und Beschmutzung und kann problemlos gereinigt werden. Der hermetisch abgeschlossene Luftraum zwischen Bildschirmoberfläche und Scheibe verhindert auch ein Beschlagen der Bildschirm- oder Scheibenoberfläche durch Luftfeuchtigkeit.

Die erfindungsgemäße Scheibe gibt auch einen Schutz des Bildschirms durch mechanische Beschädigung, da bei einmaligen starken oder wiederholten abrasiven Einwirkungen von außen zunächst die Scheibe beschädigt oder zerstört wird und es damit in vielen Fällen zu keiner weiteren Beschädigung des Bildschirms kommt. Die Scheibe ist wesentlich preisgünstiger und mit wesentlich geringerem Aufwand auszutauschen und zu ersetzen als der Bildschirm des Datensichtgeräts. Die erfindungsgemäße Konsole eignet sich damit bestens zur Aufstellung und zum Einsatz an Orten, die rauhen Betriebsbedingungen ausgesetzt sind.

Vorteilhafte Ausführungsformen der erfindungsgemäßen Bildschirmarbeitsplatz-Konsole mit weiteren Ausgestaltungen und Verbesserungen der Erfindung sind in den weiteren Ansprüchen angegeben.

Bei einer bevorzugten Ausführungsform der Erfindung ist die Scheibe als Filterscheibe mit wählbarer Filtercharakteristik zur Kontrastverbesserung der Bildschirmdarstellungen und zur Unterdrückung der Blendung durch Lichtreflexion an der Scheibenoberfläche ausgebildet. Eine solche Filterscheibe wird z. B von der Firma Schott unter der Handelsbezeichnung "Conturan" angeboten. Durch diese Filterscheibe werden die Bildschirmdarstellungen, wie numerische und alphanumerische Zeichen und Graphiken, deutlich sichtbar, während die Konturen des Bildschirms und des Datensichtgeräts unsichtbar bleiben, so daß für den Bediener der Eindruck entsteht, daß die Filterscheibe unmittelbar den Bildschirm darstellt.

Diese auch ästhetisch ansprechende Erscheinungsform der Filterscheibe ist auch dann von besonderem Vorteil, wenn gemäß einer weiteren Ausführungsform der Erfindung zwei Datensichtgeräte vorgesehen werden, deren Bildschirme vertikal übereinander und zur Aufrechterhaltung gleicher Sichtabstände zueinander geneigt angeordnet sind. In diesem Fall wird jedem Bildschirm eine Scheibe zugeordnet, und die beiden Scheiben werden fugenlos aneinandergesetzt. Die Bildschirme können dabei in Form und Größe verschieden gewählt werden, ohne daß dies der Bediener erkennt. Durch die fehlenden Konturen der Bildschirme und Datensichtgeräte und durch das fugenlose Aneinandersetzen der Scheiben sieht der Bediener eine einheitliche Darstellungsfläche mit zwei getrennten Bildern, so daß auch die Augen des Bedieners nicht durch unbeachtliche Elemente, wie Bildschirm, Ränder, Fugen oder Kanten, abgelenkt werden.

Die die Gehäuseöffnung ausfüllende, dem Bildschirm vorgesetzte Scheibe kann gemäß einer weiteren Ausführungsform der Erfindung auch mit einer Oberflächenvergütung zur Dämpfung der Lichtreflexion an der Scheibenoberfläche versehen werden. Die Beschichtung kann auf eine oder auf beiden Seiten der Scheibe erfolgen. Bei Vorsehen einer solchen Scheibe mit Oberflächenvergütung wird gemäß einer weiteren Ausführungsform der Erfindung die Oberflächenvergütung elektrisch leitfähig ausgebildet und geerdet. Damit werden elektrostatische Ladungen von der Scheibe abgeleitet und deren elektrostatisches Aufladen vermieden.

In einer bevorzugten Ausführungsform der Erfindung wird die Abdichtung zwischen Bildschirm und Scheibe dadurch erreicht, daß der Freiraum zwischen dem Datensichtgerät und der mit geringem Abstand vorgesetzten Scheibe durch eine an der Scheibe ansetzende umlaufende Blende hermetisch abgedichtet wird. Diese hermetische Abdichtung der Blende wird bevorzugt durch jeweils eine ein- oder mehrfache Lippendichtung erzielt, die einerseits zwischen der Blende und dem Bildschirm und andererseits zwischen der Blende und der Scheibe angeordnet ist. Die Blende wird an der Scheibe und am Datensichtgerät jeweils stirnseitig befestigt, z. B. verklebt. Bevorzugt wird dabei mindestens eine Befestigung schnellösbar ausgeführt, z. B. durch Klettband, Magnete, Schnellverschluß u. dgl., um die Scheibe bzw. Scheibe mit Blende bei Verschleiß, Beschädigung oder Zerstörung mit geringem Aufwand schnell auswechseln zu können.

Bei thermischem Abschluß des Konsolengehäuses kann die im Innern des Konsolengehäuses erzeugte und von dort durch Belüftung kontrolliert abgeführte Wärme in vorteilhafter Weise anteilig unter Erwärmung des Raumklimas abgeführt werden. Dies geschieht in vorteilhafter Weise dadurch, daß gemäß einer weiteren Ausführungsform der Erfindung auf die Außenfläche mindestens einer Gehäusewand aus wärmeleitendem Material des Konsolengehäuses ein dazu längsverlaufender, oben und unten offener Schacht zur Erzeugung einer Luftströmung durch Wärmekonvektion aufgesetzt ist. Bevorzugt wird dabei der Schacht wahlweise auf eine der beiden Seitenwände des Konsolengehäuses aufgesetzt, so daß bei einer Gruppierung mehrerer Konsolen die Schächte nebeneinanderstehender Konsolen aneinanderliegen.

Die Erfindung ist anhand eines in der Zeichnung dargestellten Ausführungsbeispiels im folgenden näher beschrieben. Es zeigen:
- Fig. 1: eine Frontansicht einer Bildschirmarbeitsplatz-Konsole in perspektivischer Darstellung,
- Fig. 2: eine Seitenansicht der Konsole in Fig. 1, teilweise geschnitten,
- Fig. 3: eine vergrößerte Darstellung des Ausschnitts III in Fig. 2,
- Fig. 4: eine Frontansicht von zwei nebeneinander angeordneten Bildschirmarbeitsplatz-Konsolen gemäß Fig. 1 in perspektivischer Darstellung,
- Fig. 5: einen Schnitt längs der Linie V-V in Fig. 4.

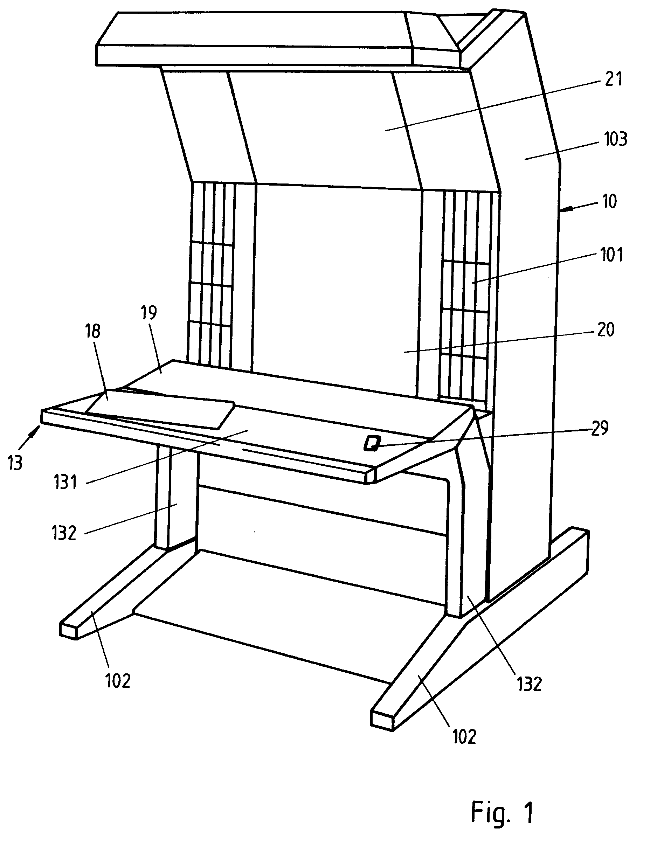

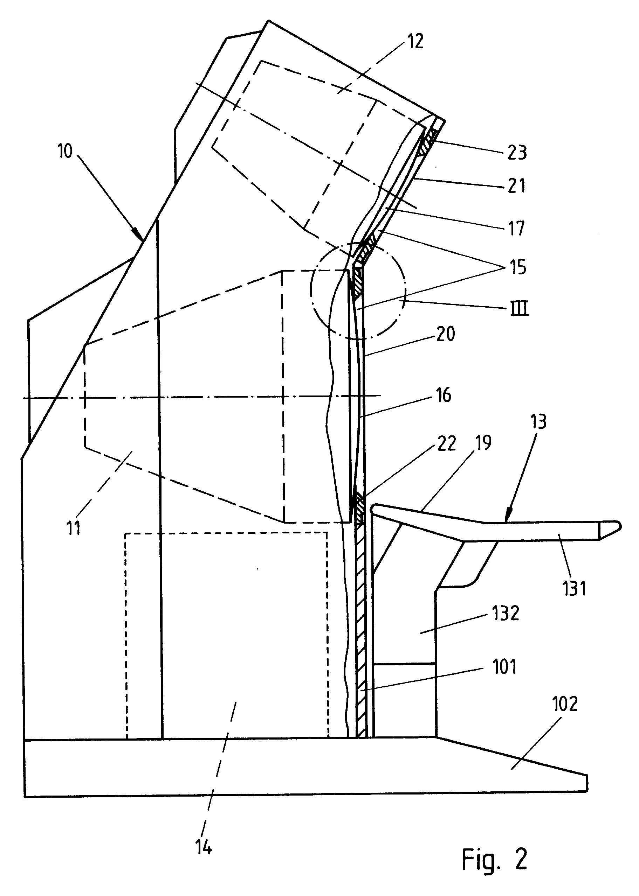

Die in Fig. 1 in perspektivischer Vorderansicht und in Fig. 2 in Seitenansicht dargestellte Bildschirmarbeitsplatz-Konsole weist ein hermetisch geschlossenes und mit einer Geräteklimatisierung ausgestattetes Konsolengehäuse 10 auf, in dem die erforderlichen Geräte aufgenommen sind. Wie in Fig. 2 angedeutet ist, sind im Innern des Konsolengehäuses 10 zwei Datensichtgeräte 11, 12, Stromversorgungseinheiten und Prozessoren zur Steuerung der Datensichtgeräte 11, 12 und eines dem Dialog mit den Datensichtgeräten 11, 12 dienenden Bedienpultes 13 untergebracht. Die Prozessoren und die Stromversorgungseinheiten sind in einem offenen Elektronikrahmen 14 zusammengefaßt. In der Vorderwand 101 des Konsolengehäuses 10 ist eine Gehäuseöffnung 15 vorgesehen, die den Blick auf die beiden Bildschirme 16, 17 der beiden Datensichtgeräte 11, 12 freigibt. Unterhalb der Gehäuseöffnung 15 ist die Arbeitsplatte 131 des Bedienpultes 13 von der Vorderwand 101 des Konsolengehäuses 10 etwa waagerecht abstehend angeordnet. Die Arbeitsplatte 131 ist mittels separater Standbeine 132 auf den Füßen 102 des Konsolengehäuses 10 aufgesetzt. Auf der Arbeitsplatte 131 ist in einer in dem der Vorderwand 101 des Konsolengehäuses 10 zugekehrten Bereich der Arbeitsplatte 131 sich erstreckenden, schräg ansteigenden Anzeigen- und Bedienebene 19 eine Vielzahl von Anzeige- und Bedieneinheiten so untergebracht, daß deren Lampen oder Schirme weitgehend blend- und reflexionsfrei sind. Eine auf der Arbeitsplatte 131 aufliegende Tastatur 18 dient zusammen mit den Bedien- und Anzeigeeinheiten und einer Maus 29 zum Dialog des Konsolenbenutzers mit den Datensichtgeräten 11, 12.

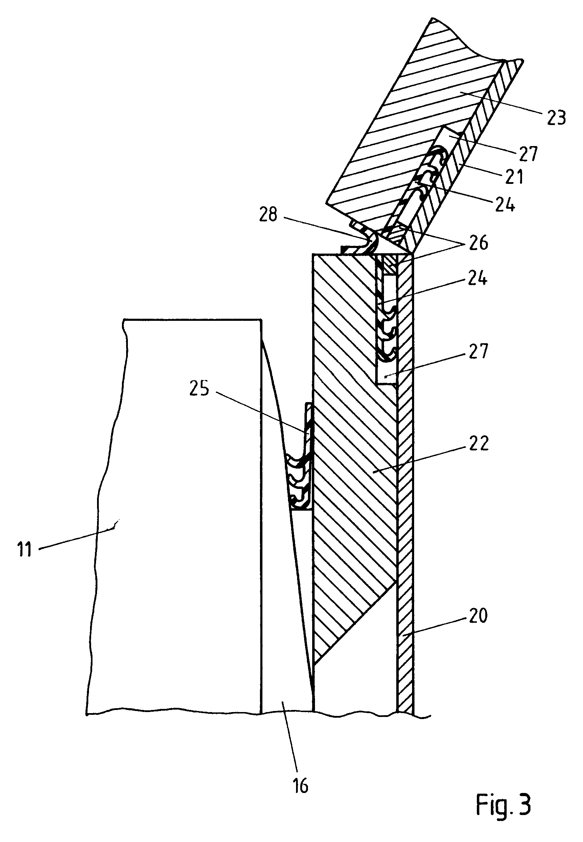

Die beiden Datensichtgeräte 11, 12 mit unterschiedlicher Bildschirmgröße sind vertikal übereinander angeordnet, wobei zur Erzielung annähernd gleicher Sichtabstände für den Konsolenbenutzer das obere, kleinere Datensichtgerät 12 zum Bedienpult 13 hin geneigt ist. Die Datensichtgeräte 11, 12 sind dabei so angeordnet, daß ihre Bildschirme 16, 17 einen geringen Abstand von der Gehäuseöffnung 15 haben und die üblicherweise vorhandene Wölbung der Bildschirme 16, 17 etwas in die Gehäuseöffnung 15 hineinragen. In die Gehäuseöffnung 15 sind zwei durchsichtige Scheiben 20, 21, z. B. aus Glas, eingesetzt, wobei jeweils eine Scheibe 20, 21 einem Bildschirm 16, 17 zugeordnet und diesem unmittelbar vorgesetzt ist. Die beiden Scheiben 20, 21, von denen die obere entsprechend der Neigung des Bildschirms 17 gegenüber der unteren Scheibe 20 geneigt ist, sind längs ihrer einen quer verlaufenden Seitenkanten 201 und 211 nahezu fugenlos und vorzugsweise weitgehend luftdicht aneinandergesetzt. Letzteres kann durch eine Dichtung oder durch Klebemasse erreicht werden. Jede Scheibe 20, 21 ist längs ihrer vier Seitenränder einerseits gegenüber der Vorderwand 101 des Konsolengehäuses 10 und andererseits gegenüber dem zugeordneten Datensichtgerät 11, 12, bzw. dessen Bildschirm 16, 17, umlaufend hermetisch abgedichtet, so daß der Zwischenraum zwischen der Scheibe 20 bzw. 21 und dem zugeordneten Bildschirm 16, 17 luftdicht abgedeckt ist und weder Staub noch Luftfeuchte in diesen Zwischenraum eindringen kann. Diese hermetische Abdichtung wird mittels umlaufender Blenden 22 und 23 erzielt, wobei die Blende 22 der unteren Scheibe 20 und dem unteren Bildschirm 16 und die obere Blende 23 der oberen Scheibe 21 und dem oberen Bildschirm 17 zugeordnet ist. Wie in Fig. 3 ausschnittsweise und vergrößert dargestellt ist, ist jede Blende 22 bzw 23 an der zugeordneten Scheibe 20 bzw. 21 und am zugeordneten Bildschirm 16, 17 bzw. Datensichtgerät 11, 12 befestigt, z.B. durch Kleben. Bevorzugt wird jedoch mindestens eine lösbare Befestigung der Blende 22, 23 an der Scheibe 20, 21 oder am Bildschirm 16, 17 mittels eines Klettverschlusses 26 oder mittels Permanentmagnete oder sonstiger Schnellverschlüsse, wie dies in Fig. 3 für die Verbindung zwischen Blende 22, 23 und Scheibe 20, 21 dargestellt ist, so daß die Scheibe 20 bzw. 21 bei Beschädigung oder Verschleiß einfach ausgewechselt und hierzu von der Blende 22 bzw. 23 oder zusammen mit der Blende 22 bzw. 23 vom zugeordneten Bildschirm 16 bzw. 17 leicht getrennt werden kann. Alternativ können die Blenden 22, 23 auch an der Vorderwand 101 des Konsolengehäuses 10 befestigt werden. Eine staubdichte Abschließung der Blenden 22, 23 gegenüber den zugeordneten Scheiben 20, 21 einerseits und gegenüber den Datensichtgeräten 11, 12 bzw. deren Bildschirme 16, 17 andererseits wird durch jeweils zwei umlaufende Mehrfach-Lippendichtungen 24, 25 erzielt, die an jeder Stirnseite der Blenden 22, 23 befestigt sind und sich mit ihren Lippen einerseits an die Rückseite der Scheibe 20 bzw. 21 und andererseits an die Oberfläche des Bildschirms 16 bzw. 17 anpressen. Die scheibenseitige Lippendichtung 24 ist dabei in jeweils einer Ausnehmung 27 in der Blende 22 bzw. 23 eingelegt. Zur vorstehend erwähnten Abdichtung der Stoßkante 201, 211 der beiden Scheiben 20, 21 ist zwischen den unter einem spitzen Winkel aneinanderliegenden Blenden 22 und 23 für die untere und obere Scheibe 20, 21 ein Dichtungsprofil 28 eingesetzt.

Die Scheiben 20, 21 sind als Filterscheiben zur Kontrastverbesserung der Bildschirmdarsteilungen und zur Unterdrückung der Blendung durch Lichtreflexionen an der Scheibenoberfläche ausgebildet. Solche Filterscheiben sind bekannt und werden beispielsweise von der Firma Schott unter der Handelsbezeichnung "Conturan" angeboten. Diese Filterscheibe hebt deutlich den Kontrast der Bildschirmdarstellungen, wie numerische und alphanumerische Zeichen und Graphiken, an und macht zugleich die Bildschirmkonturen und die Konturen der Datensichtgeräte 11, 12 unsichtbar, so daß sie das Auge des Bedieners nicht stören und die beiden Scheiben 20, 21 als einheitliche Sichtfläche für die Datendarstellung erscheinen lassen. Zusätzlich können die Scheiben 20, 21 mit mindestens einer elektrisch leitfähigen Oberflächenvergütung auf der Innen- oder Außenfläche der Scheiben 20, 21 ausgeführt werden. Eine Oberflächenvergütung auf jeder Fläche der Scheiben 20, 21 ist möglich. Eine solche Ausführung der Scheiben 20, 21 bringt den gleichen Effekt wie die vorstehend erwähnten Filterscheiben. Um elektrostatische Aufladungen abzuleiten, werden die Scheiben 20, 21 mit Oberflächenvergütung geerdet. Die Scheiben 20, 21 können mit verschiedener Filtercharakteristik ausgestattet werden, um sie optimal auf die Eigenschaften des verwendeten Bildschirms 16, 17 abzustimmen. Bei Bildschirmen mit geringer Leuchtdichte werden Scheiben 20, 21 aus transparenten Gläsern mit hohem Lichtdurchgang bevorzugt.

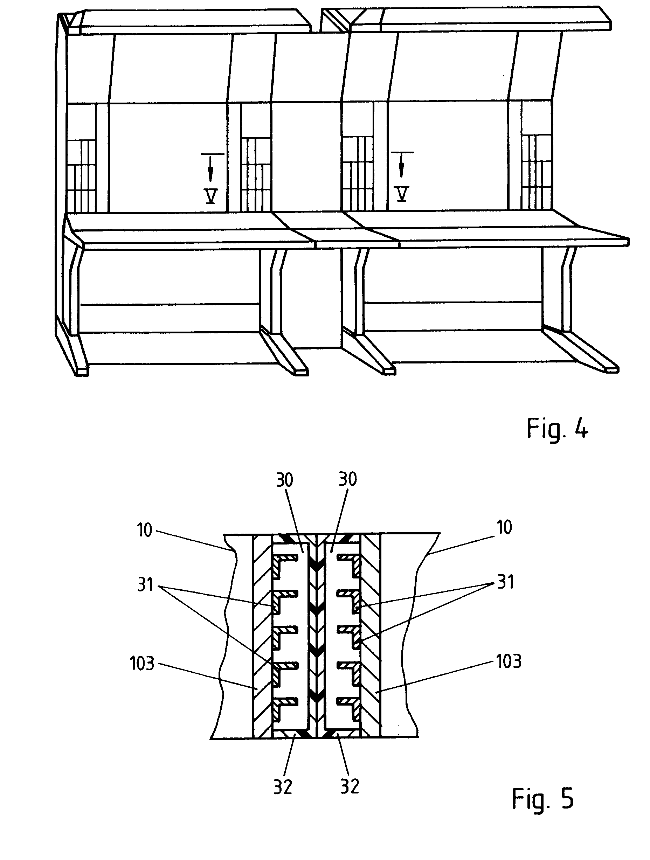

In Fig. 4 ist eine Gruppierung von zwei wie vorstehend beschriebenen Bildschirmarbeitsplatz-Konsolen in Frontansicht perspektivisch dargestellt. Die beiden Konsolen sind nebeneinander angeordnet. Auf die Außenfläche der einander zugekehrten Seitenwände 103 der beiden Konsolengehäuse 10 ist jeweils ein vertikaler, unten und oben offener Schacht 30 (Fig. 5) aufgesetzt. Die Seitenwand 103 ist wärmeleitend ausgebildet und hierzu aus Metall gefertigt. Diese wärmeleitfähige Seitenwand 103 des Konsolengehäuses 10 bildet zusammen mit einer darauf aufgesetzten, im Querschnitt U-förmigen Abdeckung 32 die vier Wände des Schachtes 30. Auf dieser Seitenwand 103 sind quer abstehende Konvektionsstege 31 aus gut wärmeleitendem Material aufgesetzt, die hier als Winkel ausgebildet sind, deren einer Schenkel an der Außenfläche der Seitenwand 103 befestigt ist und deren anderer Schenkel in den Schacht 30 hineinragt. Durch diesen Schacht 30 mit den Konvektionsstegen 31 wird ein Wärmeübergang vom Innern des Konsolengehäuses 10 nach außen erzwungen, so daß ein Teil der durch die Geräte im Innern des Konsolengehäuses 10 erzeugten Wärme zur Erwärmung des Raumklimas herangezogen wird. Der Schacht 30 kann wahlweise auf einer der beiden Seitenwände 103 des Konsolengehäuses 10 angeordnet werden, so daß bei nebeneinander aufgestellten Konsolen der Schacht 30 der einen Konsole und der Schacht 30 der anderen Konsole deckungsgleich aneinanderliegen, wie dies in Fig. 4 und 5 zu sehen ist, und die beiden Schächte 30 mit ihren Abdeckungen 32 die Lücke zwischen zwei nebeneinanderstehenden Konsolen optisch ansprechend schließen.

## Patentansprüche

1. Bildschirmarbeitsplatz-Konsole mit mindestens einem Datensichtgerät, mit einem vor diesem angeordneten Bedienpult zum Dialog mit dem Datensichtgerät, mit Prozessoren zur Steuerung von Datensichtgerät und Bedienpult, mit Stromversorgungseinheiten und mit einem mindestens zum Bedienpult hin abgeschlossenen, vorzugsweise klimatisierten Konsolengehäuse, das im Gehäuseinnern Datensichtgerät, Prozessoren und Stromversorgungseinheiten aufnimmt, über eine Gehäuseöffnung den Blick auf den Bildschirm des mindestens einen Datensichtgeräts freigibt und an dessen Außenseite unterhalb der Gehäuseöffnung das Bedienpult angeordnet ist, dadurch gekennzeichnet, daß die Gehäuseöffnung (15) von mindestens einer durchsichtigen Scheibe (20, 21) vollständig abgedeckt ist, die längs ihrer vier Seitenränder einerseits gegenüber der Gehäusewand (101) und andererseits gegenüber dem Bildschirm (16, 17) des mindestens einen Datensichtgeräts (11, 12) hermetisch abgedichtet ist.

2. Konsole nach Anspruch 1, dadurch gekennzeichnet, daß die Scheibe (20, 21) als Filterscheibe zur Kontrastverbesserung der Bildschirmdarstellungen und zur Unterdrückung der Blendung durch Lichtreflexion an der Scheibenoberfläche ausgebildet ist.

3. Konsole nach Anspruch 1 oder 2, dadurch gekennzeichnet, daß die Scheibe (20, 21) mindestens eine auf mindestens einer Scheibenseite aufgebrachte Oberflächenvergütung zur Dämpfung der Lichtreflexion an der Scheibenoberfläche trägt.

4. Konsole nach Anspruch 3, dadurch gekennzeichnet, daß die Oberflächenvergütung elektrisch leitfähig und die Scheibe geerdet ist.

5. Konsole nach einem der Ansprüche 1 bis 4, dadurch gekennzeichnet, daß der Bildschirm (16, 17) des mindestens einen Datensichtgeräts (11, 12) mit geringem Abstand von der Scheibe (20, 21) angeordnet ist und daß eine am Datensichtgerät (11, 12) und an der Scheibe (20, 21) ansetzende, umlaufende Blende (22, 23) den Freiraum zwischen Bildschirm (16, 17) und Scheibe (20, 21) hermetisch abdichtet.

6. Konsole nach Anspruch 5, dadurch gekennzeichnet, daß die hermetische Abdichtung durch jeweils eine Lippendichtung (24, 25) erzielt wird, die zwischen der Blende (22, 23) und dem Bildschirm (16, 17) bzw. der Scheibe (20, 21) umlaufend angeordnet ist.

7. Konsole nach Anspruch 5 oder 6, dadurch gekennzeichnet, daß die umlaufende Blende (22, 23) am Datensichtgerät (11, 12) oder dessen Bildschirm (16, 17) und an der Scheibe (20, 21) befestigt ist und daß mindestens eine Befestigung schnellösbar ausgebildet ist, z.B. als Klettband (26), Magnete und dgl..

8. Konsole nach einem der Ansprüche 1 bis 7, dadurch gekennzeichnet, daß zwei Datensichtgeräte (11, 12) vorgesehen sind, deren Bildschirme (16, 17) vertikal übereinander angeordnet sind, wobei zur Erzielung annähernd gleiche Sichtabstände der obere Bildschirm (17) gegen den unteren Bildschirm (16) geneigt ist, daß jedem Bildschirm (16, 17) eine Scheibe (20, 21) zugeordnet ist und daß die Scheiben (20, 21) längs ihrer einen, quer verlaufenden Seitenkanten nahezu fugenlos und vorzugsweise weitgehend luftdicht aneinandergesetzt sind.

9. Konsole nach einem der Ansprüche 5 bis 7 und Anspruch 8, dadurch gekennzeichnet, daß jedem Bildschirm (16, 17) eine umlaufende Blende (22, 23) zugeordnet ist.

10. Konsole nach einem der Ansprüche 1 bis 9, dadurch gekennzeichnet, daß auf die Außenfläche mindestens einer Gehäusewand des Konsolengehäuses (10) aus wärmeleitendendem Material, vorzugsweise auf eine der Seitenwände (103) des Konsolengehäuses (10), ein dazu längsverlaufender, stirnseitig offener Schacht (30) zur Erzeugung einer Luftströmung durch Wärmekonvektion aufgesetzt ist.

11. Konsole nach Anspruch 10, dadurch gekennzeichnet, daß die eine Schachtwand von der Gehäusewand (103) des Konsolengehäuses (10) gebildet ist und daß auf die Gehäusewand (103) davon querabstehende, in das Schachtinnere hineinragende Konvektionsstege (31) aus gut wärmeleitendem Material wärmeleitend aufgesetzt sind.

12. Konsole nach Anspruch 10 oder 11, dadurch gekennzeichnet, daß zur Gruppierung mindestens zweier Konsolen der Schacht (30) wahlweise auf der einen oder anderen Seitenwand (103) des Konsolengehäuses (10) befestigbar ist und daß die Schächte (30) nebeneinanderstehender Konsolen deckungsgleich aneinanderliegen.
